# EUROPEAN PATENT APPLICATION

(11) **EP 4 571 372 A1**
(43) Date of publication of application: **18.06.2025**
(21) Application number: 23216711.4
(22) Date of filing: 14.12.2023
(51) Int. Cl.: G02B 6/02, G02B 6/28

(54) **ULTRACOMPACT 3D-PRINTED SPLITTERS FOR MULTICORE OPTICAL FIBERS**

(71) Applicant: VRIJE UNIVERSITEIT BRUSSEL, 1050 Brussel (BE)
(72) Inventor: The designation of the inventor has not yet been filed
(74) Representative: Winger

(57) **Abstract**

A three-dimensional optical device (100) for coupling light from a single-core input fiber into a plurality of separate fiber cores of a multicore output fiber is disclosed. The optical device is formed in a photopolymer material and comprises an input waveguide (110), a plurality of output waveguides (130a-d), and a non-planar multimode interference section (120) for splitting light of a first mode (210) at a first end face (221) of the MMI section into a plurality of second modes (230a-d) at a second end face (222) of the MMI section. The plurality of second modes comprises a central mode (230a) and a plurality of peripheral modes (230b-d). Each output waveguide has a proximal end (131) separately connected to the second end face of the MMI section. A mode field diameter associated with the input waveguide and output waveguides is smaller at the proximal end than at the distal end. A distance between adjacent output waveguides is smaller at the proximal ends.

## Description

### Field of the invention

The present invention relates to optical couplers and interconnects for multicore optical fiber equipment, in particular compact 3D-printed optical couplers obtainable through two-photon direct laser writing.

### Background of the invention

Owing to their large bandwidth and small form factors as achieved in standard single-core optical fibers, multicore optical fibers have a wide range of applications in the fields of optical communication networks, especially in space-division multiplexing networks, quantum information systems, dense optical integration, 3D shape sensing and fiber-based sensing in medical and industrial applications. These applications often require that optical signals are efficiently coupled into or distributed over the different channels carried by a multicore fiber.

The addressing of the individual channels or cores of the multicore optical fiber through many connected single-core fibers is known as fanout and appropriate devices are commercially available. Nevertheless, the delicate nature of the bundle of pigtailed fibers for fanout requires careful handling, is rather bulky, and accommodates only a limited number of geometric arrangements of the different optical cores inside the multicore fiber.

Document US 10,295,748 B2 discloses a planar multimode interference (MMI) coupler with multiple input and output ports that is formed in a semiconductor layer. The MMI coupler has a varying width along its longitudinal axis. The MMI region is composed of multiple segments of numerically optimized segment width and gradual transitions between the different segments. The processing of semiconductor substrates, though allowing very compact device designs, is expensive, and connectorizing the planar MMI coupler with optical fiber cables is far from being easy.

Gross, S. et al. "Ultrafast-laser-inscribed 3D integrated photonics: challenges and emerging applications", Nanophotonics, vol. 4, no. 3, 2015, pp. 332-35 reviews laser-inscribed 3D integrated photonics lanterns for multicore fiber fan-out and mode-division multiplexing in optical communication applications. A disadvantage of optical components fabricated in glass by ultra-fast femtosecond laser inscription is the limited spatial resolution and low refractive index contrast, resulting in larger-sized and longer to fabricate optical structures like waveguides and bends.

In Mizera, T. et al. "3D Polymer-Based 1 × 4 MMI Splitter", Nanomaterials 2022, 12(10):1749, fabrication of a miniaturized optical MMI splitter by 3D laser lithography is described. The square structure of the 1x4 MMI splitter as well as a mechanical support for mechanically holding splitter are inscribed into a polymer using a two-photon polymerization direct laser writing technique. A single-mode optical fiber can be clamped onto the mechanical support structure to align the input fiber mode with the light-receiving side of the MMI splitter. A fiber probe of a near-field scanning optical microscope revealed the presence of four closely spaced light spots at the output facet of the square MMI splitter. Initially formed on a glass substrate, the MMI splitter has to be detached carefully to avoid any damage to or surface irregularity on the output facet of the MMI splitter. The optical splitter device measured 218 µm in total length, which is below the 300 µm length limit for devices printed by the direct laser writing technique that was used by the authors.

The development of more compact, reliable and low-cost optical devices for coupling light with low insertion loss into the channels of a multicore fiber therefore remains a challenging endeavor.

### Summary of the invention

It is an object of embodiments of the present invention to provide compact low-cost optical devices for coupling light into the channels of a multicore fiber.

The above objective is accomplished by a device according to the present invention.

In one aspect, the present invention relates to three-dimensional optical device for coupling light from a core waveguide associated with a single-core input fiber into a plurality of separate core waveguides associated with a multicore output fiber. The optical device is formed in a photopolymer material and comprises a non-planar multimode interference section, an input waveguide and a plurality of output waveguides. The non-planar multimode interference section is configured to split light of a first mode at a first end face of the multimode interference section into a plurality of second modes at a second end face of the multimode interference section. The multimode interference section extends longitudinally along a length axis (axis of elongation) between the first end face and the second end face. The input waveguide supports the first mode as a guided mode, has a distal end for receiving light supplied by the input fiber and a proximal end terminated against the first end face of the multimode interference section. Each output waveguide has a proximal end separately connected to the second end face of the multimode interference section, for extracting a respective mode of the plurality of second modes at the second end face of the multimode interference section. Each output waveguide also has a distal end for coupling light of the extracted mode into one of the core waveguides of the output fiber. A mode field diameter associated with the first mode supported by the input waveguide is smaller at the proximal end of the input waveguide than at the distal end, and a mode field diameter associated with each mode extracted by one of the plurality of output waveguides is smaller at the proximal end of the output waveguide than at the distal end. A distance between the proximal ends of adjacent output waveguides is smaller than a distance between the corresponding distal ends. The plurality of second modes at the second end face of the multimode interference section may comprise a central mode located in a central portion of the second end face of the multimode interference section and a plurality of peripheral modes surrounding the central mode. The photopolymer material preferably is a material that is suitable for two-photon absorption direct laser writing techniques.

According to some embodiments of the invention, the length axis of the multimode interference section is a central axis of the multimode interference section and the first mode is aligned with the central axis of the multimode interference section. In other embodiments of the invention, the length axis of the multimode interference section is a central axis of the multimode interference section and the first mode is offset with respect to the central axis of the multimode interference section. The central axis is defined as the axis perpendicular to the first and second end faces of the multimode interference section and intersecting the centroid (geometric barycenter) of one or both of the first end face and the second end face. In embodiments in which the multimode interference section has a n-fold rotationally symmetrical transverse cross section, n > 1, the length axis corresponds to the symmetry axis for the n-fold rotation symmetry.

According to some embodiments of the invention, the central mode of the plurality of second modes at the second end face of the multimode interference section is located on the length axis or on the central axis of the multimode interference section.

In another aspect, the present invention relates to a fiber link comprising the optical device according to embodiments of the previous aspect. The fiber link further includes an input fiber that has a central core attached or optically coupled to the input waveguide of the optical device, and a multicore output fiber attached or optically coupled to the plurality of output waveguides of the optical device.

In yet another aspect, the present invention relates to an interposer comprising the optical device according to embodiments of the previous aspect. The interposer further comprises a first planar lightwave circuit attached or optically coupled to the input waveguide of the optical device and a second planar lightwave circuit attached or optically coupled to the plurality of output waveguides of the optical device.

In some embodiments of the invention, the peripheral output waveguides are bent radially outwards in accordance with an S-shape. This has the advantage of providing a desired amount of lateral offset over a shorter longitudinal distance (bend length) and at reduced optical bend losses.

According to some embodiments of the invention, the input waveguide connects to the first face of the multimode interference section at a location that is offset with respect to a centroid of the first face. This has the advantage of providing more design freedom for the optical device and additional control on the interference pattern formation and output mode location at the second face of the multimode interference section.

According to some embodiments of the invention, the multimode interference section is configured to split light of the first mode at the first end face symmetrically into the plurality of second modes at the second end face. In other embodiments, the splitting is performed asymmetrically, i.e. different intensities or power splitting ratios are associated with the different second modes.

According to some embodiments of the invention, the sizes and/or shapes of the input waveguide and the output waveguides is different.

Optical devices according to embodiments of the invention may have air as a cladding material, which advantageously increases the refractive index contrast and allows for more compact device features.

In embodiments of the invention, the multimode interference section may exhibit threefold or sixfold rotational symmetry about the length axis. In particular embodiments of the invention, the multimode interference section may have a triangular transverse cross-section. Such embodiments are well-suited for use with multicore fiber sensors, in which input light has to distributed to or collected from at least three shape-sensing edge cores and a temperaturesensing central core.

Optical devices in accordance with embodiments of the invention may comprise a mechanical support structure which creates a distance between the multimode interference section, and any input and output waveguides (including core waveguides of optical fibers) coupled thereto, on the one hand, and the substrate surface on the other hand. This facilitates butt-coupling alignment with the input and output fiber whose core waveguides are also located at this distance (e.g. typically the fiber radius) when the fiber is positioned on the substrate. Moreover, the mechanical support structure can also facilitate the removal of the fabricated optical device from the substrate and its transfer to a different support. The mechanical support structure can be printed together with the other components of the optical device.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 is a perspective view of an optical device according to a first embodiment of the invention.
FIG. 2 is a detailed view of the MMI section in the optical device of FIG. 1.
FIG. 3 shows the steady-state intensity distribution in a longitudinal cross-section through the MMI section of FIG. 2, as obtained by an FDTD simulation tool.
FIG. 4 shows the steady-state intensity distribution of the interference pattern generated at the second end face of the MMI section of FIG. 2, as obtained by an FDTD simulation tool.
FIG. 5 and FIG. 6 are graphs illustrating simulated polarization-dependent and wavelength-dependent excess losses for the extracted central and the three peripheral second modes of the MMI section of FIG. 4, respectively.
FIG. 7 illustrates how a single-core input fiber is optically coupled to a multicore output fiber via an optical device according to an embodiment of the invention.
FIG. 8 is a perspective view of a non-planar MMI section of an optical device according to a second embodiment of the invention.
FIG. 9 shows a CAD model of an optical device according to a third embodiment of the invention.
FIG. 10 shows an SEM image of a fabricated optical device in accordance with an embodiment of the invention.
FIG. 11 illustrates the use of an optical device in accordance with embodiments of the invention as an optical interposer for coupling light between different components of a same photonic integrated chip.
FIG. 12 illustrates the use of an optical device in accordance with embodiments of the invention as an optical interposer for coupling light between different photonic integrated chips.
FIG. 13 shows an MMI section with connected input waveguide in a perspective view and in a cross-sectional view, which can be used in an optical device in accordance with a fourth embodiment of the invention.
FIG. 14 shows the steady-state intensity distribution of the interference pattern generated at the second end face of the MMI section of FIG. 13, as obtained by an FDTD simulation tool.
FIG. 15 shows an MMI section with connected input waveguide in a perspective view and in a cross-sectional view, which can be used in an optical device in accordance with a fifth embodiment of the invention.
FIG. 16 shows the steady-state intensity distribution of the interference pattern generated at the second end face of the MMI section of FIG. 15, as obtained by an FDTD simulation tool.
FIG. 17 shows an MMI section with connected input waveguide in a perspective view and in a cross-sectional view, which can be used in an optical device in accordance with a sixth embodiment of the invention.
FIG. 18 shows the steady-state intensity distribution of the interference pattern generated at the second end face of the MMI section of FIG. 17, as obtained by an FDTD simulation tool.
FIG. 19 shows an MMI section with connected input waveguide in a perspective view and in a cross-sectional view, which can be used in an optical device in accordance with a seventh embodiment of the invention.
FIG. 20 shows the steady-state intensity distribution of the interference pattern generated at the second end face of the MMI section of FIG. 19, as obtained by an FDTD simulation tool.
FIG. 21 shows optical devices in accordance with embodiments of the invention, which are directly attached onto the end facet of an optical fiber tip, for direct 3D printing onto fiber tips of single core and multicore optical fibers respectively.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

Directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention. Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

Hereinunder, first modes at the first end face of the optical device are also referred to as input modes and second modes at the second end face of the optical device as output modes.

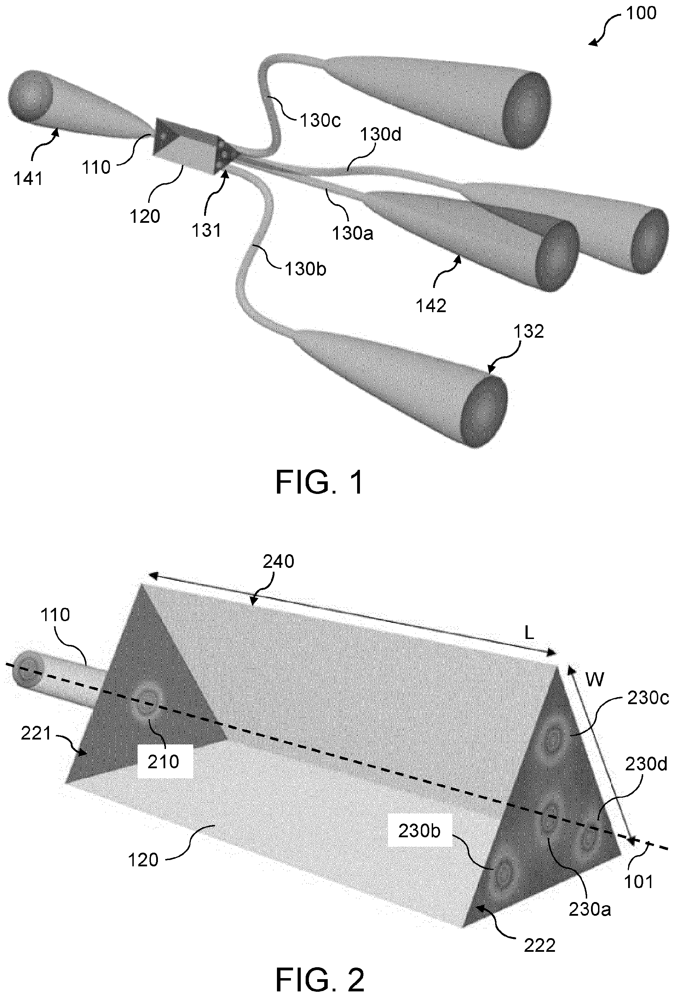

FIG. 1 is a perspective view of an optical light coupling device according to a first embodiment of the invention. The optical light coupling device 100 is formed in a light-sensitive printing material for two-photon polymerization, e.g. a photoresin or photopolymer, and has a non-planar, three-dimensional structure. The optical coupler 100 comprises a multimode interference (MMI) section 120, an input waveguide 110 connected to a first end face of the MMI section and a plurality of output waveguides 13a-d connected to a second end face of the MMI section, separated from the first end face by a distance along a central axis of the MMI section. The input waveguide 110 is an optical waveguide suitable for delivering light from an optical input fiber (not shown) to the first end face of the MMI section. The MMI section 120 is adapted for splitting the light of a first mode, e.g. the fundamental mode of the input waveguide, received at its first end face into a plurality of second modes at its second end face. The output waveguides 130a-d are separate optical waveguides suitable for delivering light from the second end face of the MMI section 120 to an optical multicore output fiber (not shown). Each output waveguide 130a to 130d has a proximal end 131, separately connected to the second end face of the MMI section, for extracting a respective mode of the plurality of second modes at the second end face of the MMI section, and a distal end 132 for coupling light of the extracted mode into one of the core waveguides of the output fiber. The plurality of second modes at the second end face of the MMI section comprises a central mode on the central axis of the multimode interference section and a plurality of peripheral modes surrounding the central mode. This geometrical configuration of second modes at the second end face of the MMI section facilitates the addressing of and the coupling of light into the optical cores of a multicore output fiber that comprises a central core surrounded by one or more concentric layers of peripheral cores. Such multicore optical fibers are frequently used in 3D shape or deformation sensing applications, in which a strain-insensitive (strain-protected) central core is used for temperature reference measurements and at least three edge cores are provided with fiber gratings for differential strain measurements and local bend identification.

For reasons of compactness and increased manufacturing throughput, the optical coupler device as a whole and the MMI section in particular should be kept as short as possible. The inventors found that compact optical coupler devices with very short MMI section can be obtained if the mode field diameters of the at least one first mode and each of the plurality of second modes is reduced significantly compared to the mode field diameters of the respective optical cores of the input and output fiber that are addressed by the optical coupler device. Therefore, the input and output waveguides of optical coupler devices according to embodiments of the invention are configured to have a smaller associated mode field diameter at their proximal end compared to their distal ends. This may be achieved by means of waveguide tapers 141, 142 arranged between the proximal end and the distal end of the respective input/output waveguide 110, 130a-d. A tapered region 141 along the input waveguide 110 may be of similar or different design as a tapered region 142 along each output waveguide 130a-d. The tapered regions 141, 142 along the input or output waveguides provide an adiabatic transition from a larger waveguide cross-section at the distal end to a smaller waveguide cross-section at the proximal end. In embodiments of the invention in which the cross-sectional shape of the input or output waveguides is different at the distal end compared to the proximal end, the tapered regions may be configured to cause a smooth change in the waveguide shape in addition to any change in transverse dimensions. In embodiments of the invention, the waveguide tapers may be parabolic tapers, e.g. as shown in FIG. 1, linear tapers, or more advanced curved tapers.

In order to reduce the negative impact of cross-talk between the different channels in a multicore output fiber, the distance between adjacent optical cores is usually larger than the mode field diameter associated with each core. Typically, the distances between optical cores of a multicore fiber is in the range from 20 µm to 50 µm. Such distances, however, are not compatible with the much tighter spacing between second modes of the plurality of second modes, which are extracted at the second end face of the compact MMI section, for addressing these optical fiber cores. Output waveguides of optical coupler devices according to embodiments of the invention are therefore arranged such that a distance between the proximal ends of adjacent output waveguides is smaller than a distance between the corresponding distal ends. This can be achieved by bending the output waveguides 230b-d corresponding to the peripheral second modes at the second end face of the MMI section radially outwards, i.e. away from the central axis of the MMI section. The central output waveguide 230a, corresponding to the central second mode at the second end face of the MMI section, may be a straight waveguide, e.g. free of any bends, which is aligned with the central axis of the MMI section. Nevertheless, a straight central output waveguide is not a strict requirement of the invention. For instance, an undulating or spiralling configuration of the central output waveguide or a portion thereof, e.g. spiralling around the central axis of the MMI section, may be more convenient to adjust an optical phase difference between the central output waveguide and one or more of the peripheral output waveguides in phase-sensitive applications. Bends of the peripheral output waveguides 130b-d may be defined as a Bezier-type curve in 3D space and display a typical S-shape, e.g. as shown in FIG. 1. Peripheral output waveguides bent according to an S-shape have the advantage of providing a given amount of lateral offset over a shorter longitudinal distance (bend length) and at reduced optical bend losses. Nonetheless, output waveguides may adopt a different bend form, e.g. a pair of ninetydegree turns, bends defined by a hyperbolic tangent or trigonometric function, etc.

Although configured as circular waveguides in the present embodiment, the cross-sectional shape of the input waveguide and the output waveguides is not limited to circles in particular. For instance, alternative square-shaped transverse cross-sections for the input and output waveguides have been demonstrated to perform well, while yet other cross-sectional shapes are possible. The geometry of the input and output waveguides can be adapted to single-mode operation or few-mode operation over the specified wavelength range, e.g. over the range from 1530 nm to 1630 nm covering the C-band and/or L-band for optical telecommunication. Geometric dimensions (e.g., diameter, height or width) for the proximal end portions of the input and output waveguides, i.e. the waveguide portions adjacent to the MMI section, are typically in the range from 1 µm to 4 µm. For instance, 2x2 µm² square shaped or 2 µm diameter circular waveguides may be connected to the input and output side of the MMI section, respectively. Conversely, the distal end portions of the input and output waveguides, i.e. the remote waveguide portions located away from the MMI section and opposite to the proximal end portions, may have a larger waveguide geometry with transverse waveguide dimensions adapted to accommodate the fundamental mode field diameter of the respective input fiber core or output fiber core addressed by the input waveguide or the output waveguide. This reduces the amount of mode mismatch and related insertion loss when the optical coupler is used as light coupler between a single-core optical input fiber and a multicore optical output fiber.

With reference to FIG. 2, the MMI section 120 of the optical coupling device is shown in greater detail. A first end face 221 of the MMI section 120 is separated from a second end face 222 by a longitudinal distance L along a central axis 101 of the MMI section. The proximal end portion of the input waveguide 110 is terminated against the first end face 221 and supports at least a first mode 210, e.g. the fundamental optical mode of the input waveguide. The input waveguide axis (propagation axis) and contact region with the first end face are aligned with the central axis of the MMI section, thus ensuring that the first mode is launched into the body of the MMI section along the central axis. The launched first mode 210 excites a plurality of guided optical modes inside the bulk volume of the MMI section, which propagate at distinct velocities towards the second end face 222, where their mutual interference pattern generates a spatially localized light distribution consisting of a plurality of second optical modes 230a-d. The longitudinal distance "L" corresponds to the length of the MMI section 120 and is typically optimized for optimal separation, i.e. minimal cross-talk, between the second modes 230a-d at the second end face 221. The proximal end portions of the individual output waveguides (not shown here) are connected to the second end face 222 at locations that are aligned with respective ones of the plurality of second modes 230a-d, whereby light in the different second modes is extracted into the corresponding output waveguides. The geometrical arrangement of the plurality of second modes on a triangular lattice facilitates the identification and connection of the corresponding output waveguides and addressed fiber channels (e.g. optical cores) of the output fiber. A mode field diameter of the proximal end portions of the output waveguides sufficiently overlaps with the light spot of the corresponding second modes at the second end face of the MMI section, thereby reducing reflection losses at the second end face.

In the present embodiment, the MMI section 120 has a triangular cross-section, e.g. equilateral triangle of side length W, and exhibits a three-fold rotation symmetry with respect to the central axis. In consequence, the MMI section 120 achieves symmetric power splitting of the first mode 210 at the input side into four modes 230a-d at the output side, e.g. the MMI section 120 is configured to act as a symmetric 1x4 power splitter. Moreover, the cross-section of the MMI is constant along the central axis and the MMI section 120 has a non-planar 3D structure, meaning that excitable optical modes within the MMI section are not confined to space regions of sizes comparable to or smaller than the wavelength of the light in the excitable optical modes in any one of the transverse directions (e.g. width, height) in cross-sectional planes perpendicular to the central axis, but spread over an area that comprises multiple times the wavelength in both width and height.

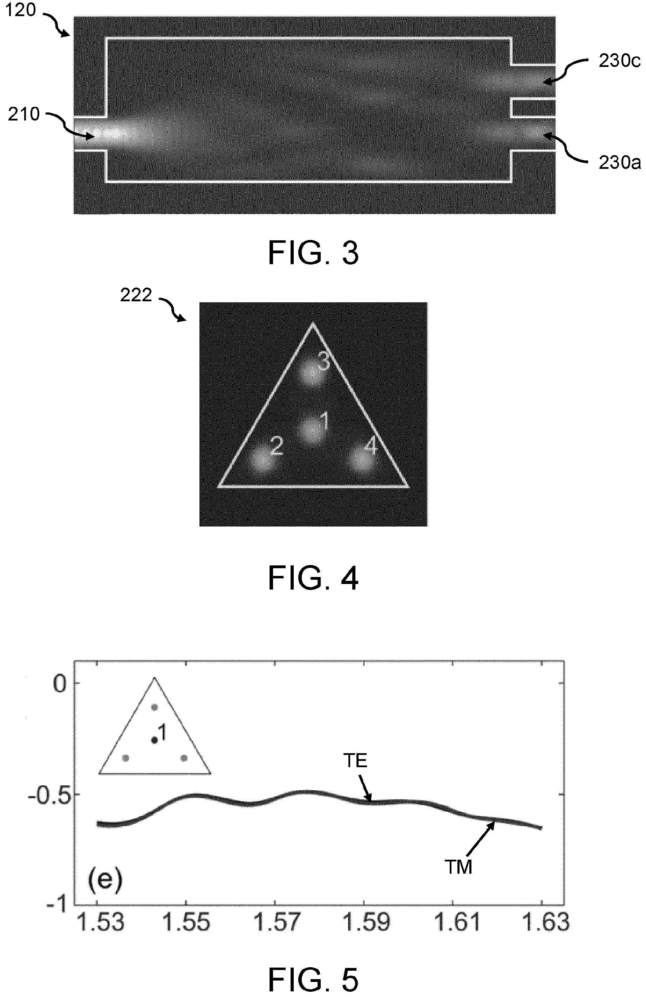

FIG. 3 illustrates the steady-state intensity distribution of the ensemble of excited optical modes in a longitudinal cross-section through the MMI section 120, using an FDTD simulation tool. The longitudinal cross-section is taken along the upper edge 240 of the MMI section 120 and contains the central axis 101. In the simulated example, the MMI section 120 has a length - L - of only 25 µm. It is clearly visible how the launched mode 210 at the input facet 221 of the MMI section 120 excites higher-order optical modes inside the volume of the MMI section. These higher-order modes evolve independently over the length of the MMI section and mutually interfere at the output facet 222, thereby generating an interference pattern comprising a first and a second locus of spatially focussed light respectively associated with the second modes 230a and 230c. FIG. 4 shows the steady-state intensity distribution of the interference pattern generated at the second end face 222 of the MMI section 120. The originally launched first mode 210 as input mode to the MMI section 120 has evolved into four distinct, well-separated spot-like output modes labelled as "1" to "4". These output modes "1" to "4" correspond to the second modes 230a to 230d as indicated in FIG. 2.

According to embodiments of the invention, the overall device length of optical couplers may be less than 200 µm, while the MMI section may be shorter than 150 µm, more preferably shorter than 100 µm, e.g. shorter than 50 µm, e.g. shorter than 30 µm. Likewise, the lateral dimensions of the MMI section (e.g. width and height) are preferably smaller than the smallest mode field diameter associated with the optical cores of the input and output fiber for the targeted wavelength range, e.g. smaller than 15 µm over the C-band and/or L-band for optical telecommunication.

By way of example, the optical coupler device 100 of the first embodiment may have a total length of 180 µm and a simulated excess loss of about 1.2 dB per addressed core (including butt-coupling losses at the interfaces between the input/output waveguide of the optical coupler device and the input/output fiber), comprising:
- a triangular cross-section, 3D MMI section 120 of longitudinal length L = 25 µm and side length W = 10 µm,
- 49 µm long parabolic input and output waveguide tapers 141 and 142, for reducing the diameter of the circular input and output waveguides from 15 µm at the distal end to 2 µm at the proximal end,
- 36 µm long S-bends in the peripheral output waveguides 130b-d, each providing a radial offset of 32 µm away from the central axis 101 of the MMI section 120, this to match the core-to-core distance of a 7-core optical fiber SM-7C1500 from Fibercore, and
- an initial 3 µm center-to-center distance between the proximal ends of the output waveguides.

Depending on the particular waveguide geometry of the input and output waveguides, the first mode and the second modes may correspond to the fundamental guided optical mode of the respective waveguide, or may be represented as a superposition of two substantially orthogonally polarized waveguide modes. Circular input and output waveguides, for example, support two degenerate modes as fundamental modes of different polarization state, i.e. a transverse electric mode (TE) and a transverse magnetic mode (TM). If the optical coupler device is used to address the optical cores of a typical single-core input fiber and multicore output fiber, the polarization state of light received from the input fiber is generally unknown. Hence, polarization-insensitive input and output waveguides are preferred in this case and the MMI section is preferably optimized for low polarization-dependent loss (i.e., low peak-to-peak variation of the coupled light at the output of the coupler device when the polarization state of the input light is varied over all possible states).

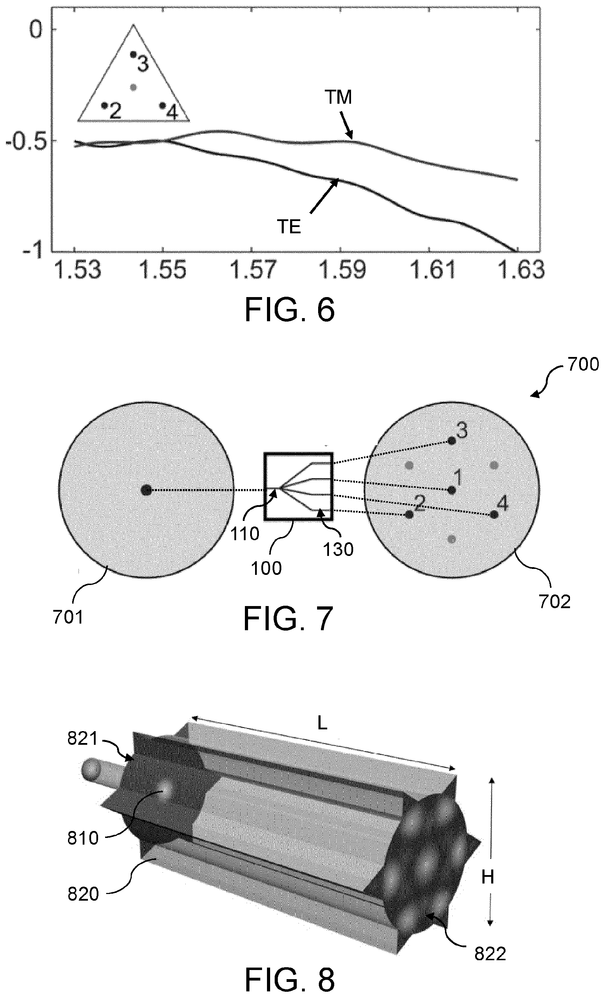

FIG. 5 and FIG. 6 are graphs illustrating the simulated polarization-dependent excess losses (in dB) for the extracted central and the three peripheral second modes of the MMI section of the first embodiment, respectively. The excess losses for the two orthogonal, linear polarization states of circular cross-section input and output waveguides, designated as "TE" and "TM", are plotted as a function of wavelength (in µm). Due to the 3-fold rotation symmetry about the central axis of the MMI section, the loss profiles of the three peripheral output modes are identical. Only very limited polarization-dependent excess loss is observed for the central mode "1" over the specified wavelength range. The average excess loss is about 0.56 dB and the wavelength-dependent excursion is 0.17 dB at most. With regard to the three peripheral modes "2", "3" and "4", the polarization-dependent and wavelength-dependent excess losses are emphasized at the longer wavelengths. The expected excess loss is approximately 0.6 dB on average, while the wavelength-dependent excursions are 0.22 dB and 0.50 dB for the TM and the TE polarization states, respectively.

FIG. 7 illustrates how the optical coupling device 100 of the first embodiment can be used in a fiber link 700, in which a single-core input fiber 701 is optically coupled to a multicore output fiber 702 via the optical coupling device. The input fiber 701 and output fiber 702 are attached (e.g. by optical glue, or via an optically transparent component printed on one of the fiber tips and glued onto the other fiber tip) or otherwise coupled (e.g. free-space coupling, or coupling via an optically transparent component printed on one of the fiber tips and free space coupled to the other fiber tip) to respective ends of the optical coupling device. More specifically, the input waveguide 110 is attached to an end facet of the input fiber 701 such that it is aligned with the single optical core of input fiber 701. Similarly, the output waveguides 130 are attached to an end facet of the output fiber 702 such that they are aligned with respective optical cores of output fiber 702, e.g. the central core "1" and three equidistant peripheral cores "2", "3" and "4". Hence, the optical coupler device 100 is used to address the central core and three edge cores of a 7-core output fiber. Examples of similarly sized input and output fiber (e.g. 125 µm diameter) are the commercial "SMF-28" single-mode fiber (Corning) and 7-core "SM-7C1500" multicore fiber (Fibercore) respectively. Without being limited to this particular design, a distal end portion of a 15 µm diameter, circular cross-section input waveguide (refractive index ~ 1.5), or square-shaped cross-section input waveguide with 14 µm side length, results in low coupling losses with respect to the commercial SMF-28 input fiber. Identically configured distal end portions of the output waveguides also achieve low coupling losses with respect to the individual cores of the commercial SM-7C1500 output fiber.

In embodiments of the invention, not all the optical cores of the output fiber need to be addressed, but can be addressed. Here, the optical coupler 100 is configured as a symmetric splitter which equally divides the optical power supplied by the input fiber 701 by four and injects each power fraction into a respective one of the output fiber cores. Conversely, the optical coupling device 100 may also be used as an optical combiner that combines the optical signals of four channels of the multicore fiber 702 into a single optical channel of the single-core fiber 701. The four channels of the multicore fiber 702 may have different wavelengths, in which case the combined signal in the single-core fiber 701 is wavelength-multiplexed.

As explained previously, the multicore fiber 702 can be used in deformation sensing applications in which a strain-insensitive central core of the multicore fiber is used for temperature reference measurements, whereas the surrounding edge cores comprise fiber gratings for strain measurements and local bend identification. Optical coupling devices according to embodiments of the invention can be designed in a very flexible manner, in order to meet the requirements of very specific combinations of input fiber and output fiber. The number and geometric arrangement of the plurality of second modes and corresponding output waveguides can be adapted to match the desired number and geometrical configuration of optical cores within a broad range of existing multicore fibers. For instance, optical coupling devices in accordance with embodiments of the invention may split the light of the at least one first mode into a number N of second modes, wherein N ranges from 3 to 50, e.g. N being equal to any of: 4, 7, 9, 12, 19, 31, 37. The plurality of second modes and corresponding output waveguides may be placed on vertices of a regular lattice, e.g. triangular, rectangular or square lattice, on vertices distributed over one or multiple concentric circles, or even on a set of randomly arranged vertices. There is no need to redesign multicore fiber that already exist on the market.

In preferred embodiments of the invention, the cross-section of the MMI section is constant along the central axis, but this is not a limiting factor. For instance, free-form MMI sections can be manufactured by two-photon direct laser writing in which the cross-section varies smoothly along the central axis, e.g. the cross-section of a given shape is magnified or shrunk in areal size along the central axis.

Similarly, the cross-section of the MMI section is not limited to triangular shapes, but may be shaped more generally as an arbitrary polygon, e.g. a non-self-intersecting convex or concave polygon, e.g. regular convex polygon or star-shaped polygon, or any connected area that is delimited by an outer boundary formed by a sequence of edges and/or arcs. Furthermore, less symmetric cross-sections of the MMI section can be used to obtain non-symmetric splitting ratios in some embodiments of the invention. For instance, a triangular cross-section of the MMI section in which the triangle is not equilateral can be used to achieve non-symmetric splitting ratios among the plurality of second modes. Conversely, a rotational symmetry about the central axis of the MMI section can be N-fold, with N being larger than three, e.g. N = 4, 5 6, 7, 12, 15, 18, 24, 36. In preferred embodiments of the invention, the MMI section has a solid, non-hollow body.

FIG. 8 is a perspective view of a non-planar MMI section 820 of an optical coupling device according to a second embodiment of the invention. The MMI section 820 is configured to equally split light of an input mode 810 at a first end face 821 into seven output modes at a second end face 822. Here, a central output mode is surrounded by six regularly spaced peripheral modes, wherein all seven output modes are located on a triangular lattice. As such, the MMI section 820 of the second embodiment is suitable for addressing all seven cores of the multicore output fibre 702 shown in FIG. 7, provided that a corresponding number of output waveguides is connected to the second end face 822 for extracting all seven output modes. These output waveguides can be bent and tapered in a manner analogous to the output waveguides of the first embodiment. The cross-sectional shape of the MMI section 820 is the combination of a circle and a six-pointed star (hexagram). The six-pointed star is the compound shape of two equilateral, mutually inverted triangles, which is why three additional output modes are obtained at the second end face 822 of MMI section 820, compared to the output modes generated at the second end face 221 of MMI section 120. The additional volume of the second triangle perturbing the initial radial position of the output modes associated with the first triangle, and vice versa, arched segments are introduced between the successive points of the star for compensation. The longitudinal distance "L" separating the first end face 821 from the second end face 822 pf the MMI section 820 may be less than 100 µm, e.g. less than 50 µm, e.g. 25 µm. The height "H" of the MMI section 820 may be less than 15 µm, e.g. about 10 µm.

Optical devices according to embodiments of the invention can have air as a cladding material, which advantageously increases the refractive index contrast and allows for more compact device features like waveguides, bends, etc. Alternatively, the optical device can be embedded in a cladding material that is different from air, e.g. a solid cladding material that provides additional support, lends more strength to the optical device and protects it from damage.

If air is chosen as the cladding material, the optical device may be formed and supported by the surface of an underlying substrate onto which a photoresist has been cast for 3D printing of the device structure. Alternatively, the optical device comprises a mechanical support structure that creates a distance between the MMI section and connected input and output waveguides on the one hand and the substrate surface on the other hand. This facilitates butt-coupling alignment with the input and output fiber whose core waveguides are also located at a predetermined distance, e.g. typically the fiber radius, when the fiber is positioned on the substrate. In these cases, the mechanical support structure lifts the distal end portions of input waveguide and central output waveguide of the optical device by an amount that is substantially equal to the fiber radius. Moreover, the mechanical support structure can also facilitate the removal of the fabricated optical device from the substrate and its transfer to a different support. The mechanical support structure can be printed together with the other components of the optical device. Thin ridges may be used for connecting the base of the mechanical support structure to the input and output waveguides and the MMI section, in order to minimally disturb the optical properties of these components.

In embodiments of the invention, the optical device may further comprise fiber alignment structures such as V-grooves or clamps. Fiber alignment structures can be printed together with the other components of the optical device, e.g. printed on the same substrate, in order to simplify the lateral alignment of the input and output fiber with respect to the input and output waveguides of the optical device after fabrication.

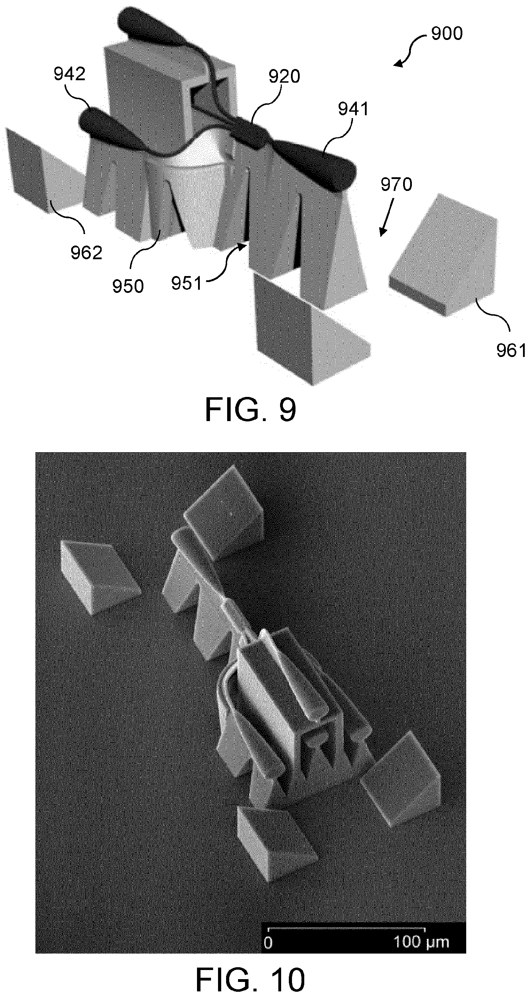

FIG. 9 shows a CAD model of an optical device 900 according to a third embodiment of the invention. The MMI section 920 and the tapered regions 941, 942 of the input and output waveguides of the device rest on a mechanical support 950 that comprises several bearing surfaces/plateaus at different heights. These heights are optimized for vertical alignment of the input and output waveguides with the respective core waveguide of the input and output fiber, respectively. Thin ridges may be used for connecting the mechanical support 950 to the input and output waveguides and the MMI section 920, in order to minimally disturb the optical properties of these components. Triangular arches 951 in the base portion of the mechanical support 950 avoid delamination caused by the volume shrinkage of the polymerized photoresist during the development stage. Furthermore, V-grooved fiber alignment structures 961, 962 are provided at the input and output side of the optical coupling device 900, in order to facilitate lateral alignment of the input and output waveguides with the respective core waveguide of the input and output fiber, respectively. Mechanical support 950 with optical components, as well as fiber alignment structures 961 and 962, are fabricated on the same substrate surface 970.

Optical coupling devices according to embodiments of the invention can be manufactured by two-photon polymerization direct laser writing. This particular type of laser stereolithography allows device features to be printed at very high resolution. Feature dimensions and voxel sizes in the sub-micron range are feasible, e.g. ~600 nm down to ~100 nm. Owing to the compact form factor of the optical coupling devices, the throughput of printed devices can be increased without an important loss in resolution. Photoresists that are frequently used for polymerization based on nonlinear two-photon or multi-photon absorption processes are suitable starting materials for the printing of the optical coupler device and include hard polyacrylic resins, soft hydrogel acrylic esters, epoxides, and organic/inorganic hybrid materials. Typically, a negative-tone resist is used in the direct laser writing. The following describes a method of fabrication for optical coupling devices in accordance with embodiments of the invention.

A liquid negative-tone photoresin, e.g. Nanoscribe's "IP-Dip" photoresin having a refractive index of 1.53 at 1550 nm after polymerization, is drop-cast onto a substrate, e.g. a planar silica substrate. The 3D-printing exposure and polymer cross-linking step is carried out with "Nanoscribe's QuantumX" 3D-printing workstation as dedicated setup for two-photon polymerization direct laser writing, in which a 63X magnification/1.4 NA objective lens is used in dip-in lithography mode to tightly focus the laser beam (e.g. 780 nm) in the voxel volume inside the photoresin. A line-by-line scanning and plane-by-plane stacking approach with galvanometric mirrors and piezo stage can be used when printing the structure on a voxel per voxel basis. After formation of the 3D optical device structure in the exposed photoresine, a developing step is performed to remove the unexposed portion of the photoresist, e.g. using propylene glycol methyl ether acetate (PGMEA) or isopropyl alcohol (IPA) as solvent developer. No prebaking and postbaking step is required with this photoresine, but may be optional steps with different photopolymer materials. Optionally, the printed structure can be embedded in a cladding material different from air.

Decreased surface roughness and lower propagation loss of the optical device are obtainable by choosing a fine voxel discretization for the 3D-printing process. In contrast thereto, a coarser voxel discretization can be used for 3D-printing of the mechanical support structures and the fiber alignment structures, which has the advantage of reducing the printing time. A single optical coupler, including the mechanical support structures and the fiber alignment structures, can be printed in 25 minutes. The very compact design of the optical device fits within the field of view of the 63X magnification/1.4 NA microscope objective and allows for stitching free 3D-printing. Stitching is causing artifacts and excess losses and should be avoided whenever possible.

FIG. 10 shows an SEM image of the fabricated optical coupling device, printed in the proprietary "IP-Dip" polymer on top of a silica substrate. A printed mechanical support structure lifts the MMI section, input and output waveguides from the substrate surface and printed V-grooves serve as alignment structures for the input and output fiber. An average excess loss of 2.18 dB has been measured for optical coupling of light via the central output waveguide of the optical device, whereas the measured average excess loss was slightly higher for the peripheral output waveguides and varied between 2.71 dB and 3.91 dB.

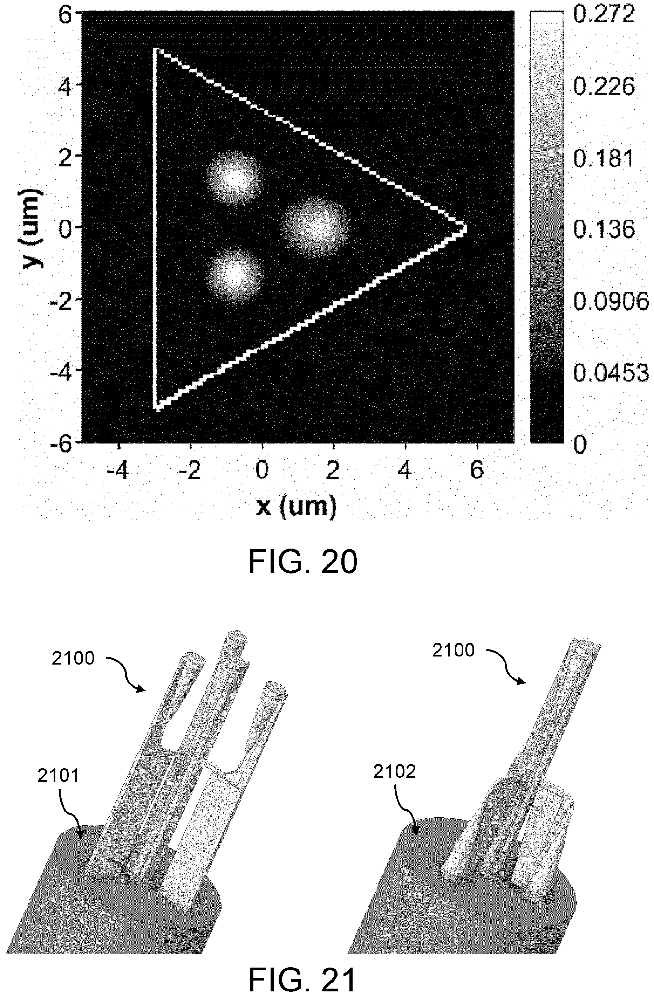

Instead of printing the optical coupling device, e.g. optical splitter, on a planar substrate, printing the optical coupling device directly on a cleaved fiber facet is also feasible. In these cases, an optical device according to embodiments of the invention can be directly integrated onto a fiber tip, e.g. the fiber tip of either the optical input fiber or the optical output fiber. Therefore, the present invention also relates to optical single-core or optical multicore fibers having a fiber tip and the optical device according to embodiments of the previous aspects of the invention formed directly on the fiber tip. The central optical core of the fiber at the fiber tip is aligned with the input waveguide or the central output waveguide of the optical device. FIG. 21 shows the example of an optical device 2100 that is integrated onto the cleaved end facet of a single core optical fiber 2101 and a multicore fiber 2102, respectively. The input waveguide of the optical device 2100 is facing the fiber end facet 2101 of the single core fiber when the optical device is directly integrated onto the tip of the single core fiber. Conversely, the output waveguides of the optical device 2100 are facing the fiber end facet 2102 of the multicore fiber when the optical device is directly integrated onto the tip of the multicore fiber. The optical device 2100 is configured for symmetric 1x4 splitting or combining, but other light coupling configurations can be achieved through adaptation of the MMI section.

Optical coupling devices for addressing the fiber cores of a multicore fiber have been described so far, with particular emphasis on the splitting/combining of light between the central core of an optical input fiber and multiple cores of an optical output fiber. However, these optical coupling devices are not limited to sole use with multicore fibers and related fiberized equipment. A further use of optical coupling devices according to embodiments of the invention is related to optical interconnects, e.g. horizontal and/or vertical optical interconnects between components located on the same planar lightwave circuit/photonic integrated chip or located on two or more different planar lightwave circuits/photonic integrated chips.

Therefore, the present invention also relates to an optical interposer which comprises:
- the optical device according to any one of the previous embodiments,
- a first planar lightwave circuit attached to the input waveguide of the optical device, and
- the first planar lightwave circuit or a second planar lightwave circuit attached to the plurality of output waveguides of the optical device.

A planar lightwave circuit may be attached to the input or output waveguides of the optical device via one or more of its components, e.g. light-emitting components such as integrated lasers or LEDs, light-absorbing components such as photodiodes, or light-guiding components such as waveguides.

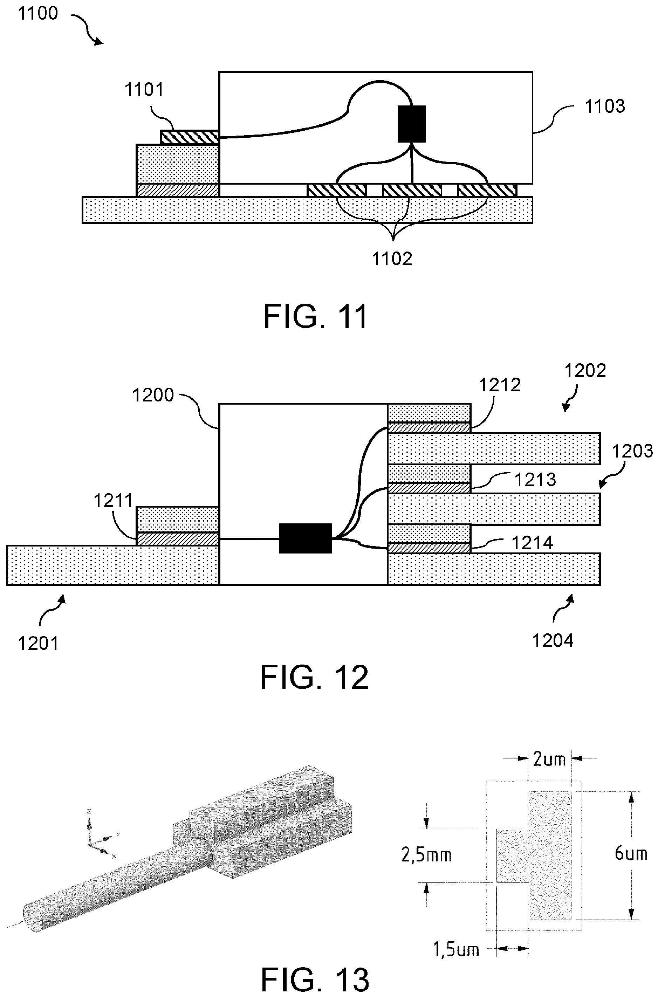

FIG. 11 is a schematic cross-section through a photonic integrated chip 1100 that comprises a first optical component 1101, e.g. an integrated laser diode, arranged at a first height on the substrate and a plurality of second optical components 1102, e.g. optical waveguides comprising vertical grating couplers, formed at a second distance on the substrate. An optical interposer 1103, e.g. comprising an optical splitter, is formed on the chip 1100 to split and deliver light from the first component 1101 to each one of the second components 1102. The second components may be arranged on a planar grid or array on the substrate.

FIG. 12 illustrates an optical interposer 1200 that is used to couple light from a first photonic integrated chip 1201 to a plurality of vertically stacked, second photonic integrated chips 1202 to 1204. The first photonic integrated chip 1201 includes an output waveguide 1211 to which the input waveguide of the optical interposer is connected. Each second photonic integrated chip 1202 through 1204 comprises a linear array of input waveguides 1212, 1213 and 1214 to which output waveguides of the optical interposer 1203 are connected.

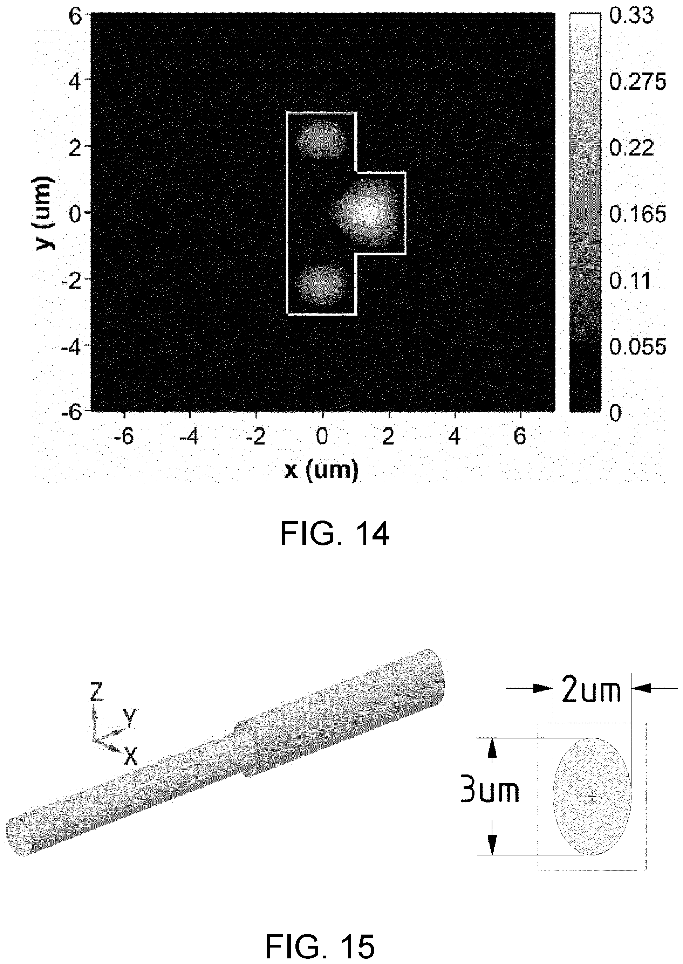

FIG. 13 shows a perspective view of and a transverse cross section through a non-planar MMI section with connected input waveguide (output waveguides not shown) as parts of a lightcoupling optical device in accordance with a fourth embodiment of the invention. In the present embodiment, the transverse cross-section, oriented perpendicularly to the central axis of the MMI section and also the propagation axis of the input waveguide, has a T-shape of which exemplary dimensions are indicated. The MMI section can be regarded as a rib waveguide of wider geometrical dimensions than the input waveguide. Although a circular input waveguide (2 µm diameter) is shown in the present embodiment, other shapes and/or sizes of the input and output waveguide are possible. FIG. 14 shows the simulated steady-state intensity distribution of the interference pattern as generated at the second end face of the MMI section of FIG. 13. The intensity distribution has been obtained by means of an FDTD simulation tool, assuming a MMI section of length L = 10.55 µm. Three output modes ('second modes' above) of different intensity values are observed in the intensity distribution/interference pattern at the output face ('second end face' above). The MMI section of this embodiment demonstrates asymmetrical 1x3 splitting of an input optical mode: at the output facet, one dominant output mode is formed near the centre of the face and is flanked by two weaker output modes.

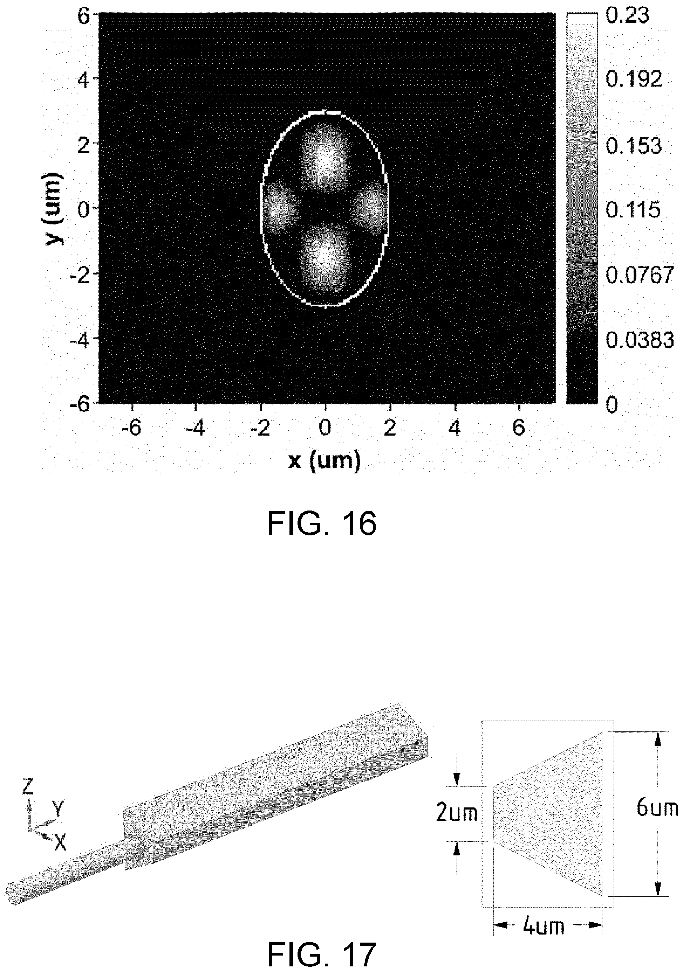

FIG. 15 shows a perspective view of and a transverse cross section through a non-planar MMI section with connected input waveguide (output waveguides not shown) as parts of a lightcoupling optical device in accordance with a fifth embodiment of the invention. In the present embodiment, the transverse cross-section, oriented perpendicularly to the central axis of the MMI section and also the propagation axis of the input waveguide, has an oval shape of which exemplary dimensions are indicated. Although a circular input waveguide (2 µm diameter) is shown in the present embodiment, other shapes and/or sizes of the input and output waveguide are possible. FIG. 16 shows the simulated steady-state intensity distribution of the interference pattern as generated at the second end face of the MMI section of FIG. 15. The intensity distribution has been obtained by means of an FDTD simulation tool, assuming a MMI section of length L = 12.3 µm. Four output modes ('second modes' above) of different intensity values are observed in the intensity distribution/interference pattern at the output face ('second end face' above). The MMI section of this embodiment demonstrates asymmetrical 1x4 splitting of an input optical mode: at the output facet, two dominant output mode are formed at diametrically opposite ends on a long axis of the oval and two weaker output modes are formed at diametrically opposite ends on a short axis of the oval. Moreover, the dimensions of the output modes are smaller than that of the mode of the input waveguide, thus allowing the use of differently sized input and output waveguides for the MMI section.

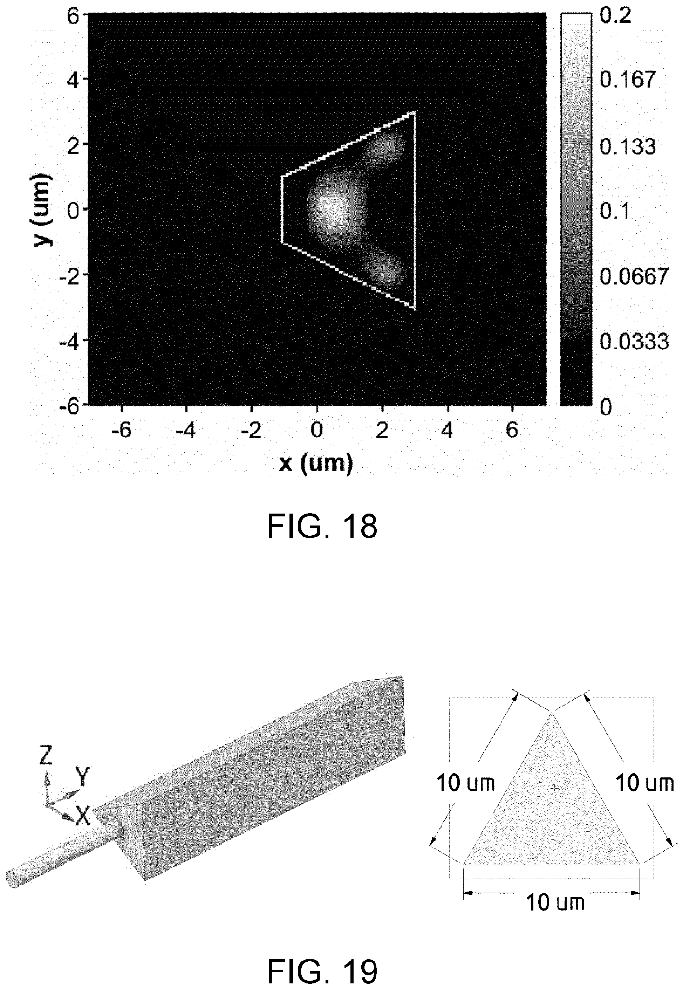

FIG. 17 shows a perspective view of and a transverse cross section through a non-planar MMI section with connected input waveguide (output waveguides not shown) as parts of a lightcoupling optical device in accordance with a sixth embodiment of the invention. In the present embodiment, the transverse cross-section, oriented perpendicularly to the central axis of the MMI section and also the propagation axis of the input waveguide, has a trapezoidal shape of which exemplary dimensions are indicated. Although a circular input waveguide (2 µm diameter) is shown in the present embodiment, other shapes and/or sizes of the input and output waveguide are possible. FIG. 18 shows the simulated steady-state intensity distribution of the interference pattern as generated at the second end face of the MMI section of FIG. 17. The intensity distribution has been obtained by means of an FDTD simulation tool, assuming a MMI section of length L = 12.3 µm. Three output modes ('second modes' above) of different intensity values are observed in the intensity distribution/interference pattern at the output face ('second end face' above). The MMI section of this embodiment demonstrates asymmetrical 1x3 splitting of an input optical mode: at the output facet, one dominant output mode is formed at the centre of the trapezoid and two weaker output modes are formed at opposite corners of the trapezoid.

FIG. 19 shows a perspective view of and a transverse cross section through a non-planar MMI section with connected input waveguide (output waveguides not shown) as parts of a lightcoupling optical device in accordance with a seventh embodiment of the invention. In the present embodiment, the transverse cross-section, oriented perpendicularly to the central axis of the MMI section and also the propagation axis of the input waveguide, has a triangular shape of which exemplary dimensions are indicated. In contrast to previous embodiments of the invention including triangularly shaped cross sections of the MMI section, the input waveguide connects to the first face of the MMI section at location that is offset with respect to the triangle's centroid (geometric barycentre). Hence, the input waveguide connects to the first face of the MMI section at location that is closer to one of the vertices of the triangle. Although a circular input waveguide (2 µm diameter) is shown in the present embodiment, other shapes and/or sizes of the input and output waveguide are possible. FIG. 20 shows the simulated steady-state intensity distribution of the interference pattern as generated at the second end face of the MMI section of FIG. 19. The intensity distribution has been obtained by means of an FDTD simulation tool, assuming a MMI section of length L = 37.0 µm and an 1.5 µm offset of the input waveguide relative to the centroid of the triangular first face of the MMI section. Three output modes ('second modes' above) of equal intensity values are observed in the intensity distribution/interference pattern at the output face ('second end face' above). The MMI section of this embodiment demonstrates symmetrical 1x3 splitting of an input optical mode: at the output facet, three output modes are formed around the centroid of the output face.

The invention may be practiced in many ways and is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A three-dimensional optical device (100) for coupling light from a core waveguide associated with a single-core input fiber into a plurality of separate core waveguides associated with a multicore output fiber, the optical device being formed in a photopolymer material and comprising:
a non-planar multimode interference section (120) for splitting light of a first mode (210) at a first end face (221) of the multimode interference section into a plurality of second modes (230a-d) at a second end face (222) of the multimode interference section, the multimode interference section extending longitudinally along a length axis (101) between said first end face and said second end face,
an input waveguide (110) supporting at least the first mode (210), the input waveguide having a distal end for receiving light supplied by the input fiber and a proximal end terminated against the first end face of the multimode interference section, and
a plurality of output waveguides (130a-d), each output waveguide having a proximal end (131) separately connected to the second end face of the multimode interference section, for extracting a respective mode of the plurality of second modes (230a-d) at the second end face of the multimode interference section, and a distal end (132) for coupling light of the extracted mode into one of the core waveguides of the output fiber,
wherein a mode field diameter associated with the at least one first mode supported by the input waveguide is smaller at the proximal end of the input waveguide than at the distal end,
wherein a mode field diameter associated with each mode extracted by one of the plurality of output waveguides is smaller at the proximal end of the output waveguide than at the distal end,
wherein a distance between the proximal ends of adjacent output waveguides is smaller than a distance between the corresponding distal ends,
wherein the plurality of second modes at the second end face of the multimode interference section comprises a central mode (230a) located in a central portion of the second end face of the multimode interference section and a plurality of peripheral modes (230b-d) surrounding the central mode.

2. The optical device according to claim 1, wherein the multimode interference section has threefold or sixfold rotational symmetry about the length axis, or lacks rotational symmetry about the length axis.

3. The optical device according to any one of the preceding claims, wherein a transverse cross-sectional shape of the multimode interference section is constant along the length axis.

4. The optical device according to claim 3 wherein the transverse cross-sectional shape of the multimode interference section is triangular.

5. The optical device according to any one of the preceding claims, wherein the input waveguide and/or each output waveguide comprises an adiabatic parabolic taper.

6. The optical device according to any one of the preceding claims, wherein the output waveguides located away from the length axis are bent radially outwards.

7. The optical device according to any one of the preceding claims, wherein the plurality of output waveguides comprises between four and forty output waveguides.

8. The optical device according to any one of the preceding claims, wherein the proximal end of the output waveguides are arranged on a triangular lattice on the second end face of the multimode interference section.

9. The optical device according to any one of the preceding claims, having an overall device length of less than 250 µm.

10. The optical device according to any one of the preceding claims, wherein the multimode interference section has a length shorter than 100 µm.

11. The optical device according to any one of the preceding claims, having air as cladding material.

12. The optical device according to any one of the claims 1 to 11, further comprising at least one mechanical support structure for lifting the length axis of the optical device from a substrate, wherein ridges connect the multimode interference section, the input waveguide and the plurality of output waveguides to the support structure, and optionally including alignment structures for lateral positioning of the single-core input fiber and the multicore output fiber relative to the multimode interference section.

13. The optical device according to any one of the claims 1 to 11, the optical device being directly formed on a fiber tip.

14. A fiber link comprising the optical device according to any one of the claims 1 to 13, an input fiber having a central core attached or optically coupled to the input waveguide of the optical device and a multicore output fiber attached or optically coupled to the plurality of output waveguides of the optical device.

15. An interposer comprising the optical device according to any one of the claims 1 to 12, a first planar lightwave circuit attached or optically coupled to the input waveguide of the optical device and a second planar lightwave circuit attached or optically coupled to the plurality of output waveguides of the optical device.
